(19) Europäisches Patentamt

European Patent Office

Office européen des brevets

(11) EP 0 096 339 B2

# (12) NEUE EUROPÄISCHE PATENTSCHRIFT

(45) Veröffentlichungstag und Bekanntmachung des Hinweises auf die Entscheidung über den Einspruch:
**28.10.1998 Patentblatt 1998/44**

(45) Hinweis auf die Patenterteilung:
**14.12.1988 Patentblatt 1988/50**

(21) Anmeldenummer: **83105379.8**

(22) Anmeldetag: **31.05.1983**

(51) Int. Cl.⁶: **B01D 61/36**, B01D 71/28

(54) **Verwendung einer mehrschichtigen Membran zur Trennung von Flüssigkeitsgemischen nach dem Pervaporationsverfahren**

Use of a multilayer membrane in the separation of liquids by pervaporation

Utilisation d'une membrane à plusieurs couches pour la séparation de mélanges liquides selon le procédé de pervaporation

(84) Benannte Vertragsstaaten:
**AT BE CH DE FR GB IT LI NL SE**

(30) Priorität: **01.06.1982 DE 3220570**

(43) Veröffentlichungstag der Anmeldung:
**21.12.1983 Patentblatt 1983/51**

(73) Patentinhaber:
**Deutsche Carbone AG**
**60407 Frankfurt (DE)**

(72) Erfinder: **Brüschke, Hartmut, Dr.**
**D-6907 Nussloch (DE)**

(74) Vertreter:
**Dost, Wolfgang, Dr.rer.nat., Dipl.-Chem. et al**
**Patent- und Rechtsanwälte**
**Bardehle . Pagenberg . Dost . Altenburg .**
**Frohwitter . Geissler & Partner**
**Galileiplatz 1**
**81679 München (DE)**

(56) Entgegenhaltungen:
EP-A- 0 047 953    DE-A- 2 129 734
DE-A- 2 441 311    DE-A- 2 642 245
DE-A- 2 642 407    DE-A- 2 850 998
DE-A- 2 920 762    DE-A- 3 005 192
US-A- 3 035 060    US-A- 3 950 247
US-A- 4 035 291    US-A- 4 230 463

- **Ju. I. Dytnerskij: "Membranprozesse zur Trennung flüssiger Gemische", VEB Deutscher Verlag für Grundstoffindustrie, Leipzig 1977, Seiten 18, 132 bis 135, 145, 154 bis 158, a89 bis 191 und 228 bis 229.**
- **Ullmans Encyklopädie der technischen Chemie, 4. Auflage, Band 16, Verlag Chemie, Weinheim 1978, Seiten 515 bis 535**
- **S. Hwang et al.: "Membranes in separations", Techniques of Chemistry, Bank VII, John Wiley & Sons, New York 1975, Seiten xxi - xxii, 67 bis 68, 99 bis 123 und 421 bis 423**
- **Kirk-Othmer: "Encyclopedia of chemical technology", 3. Auflage, Bank 15, John Wiley & Sons, New York 1981, Seiten 92 bis 117.**
- **Proceedings of the 5th International Symposium on Alcohol Fuel Tehnology, 13 bis 18. Mai 1982, Auckland, Neuseeland, Seiten 1 bis 97 und 1 106**

EP 0 096 339 B2

## Beschreibung

Es ist bekannt, daß Flüssigkeitsgemische dadurch getrennt werden können, daß das flüssige Gemisch mit der einen Seite einer geeigneten Polymermembran in Berührung gebracht wird, während auf der anderen Seite der Polymermembran ein Vakuum angelegt oder ein Inertgasstrom vorbeigeführt wird. Eine oder mehrere Komponenten des flüssigen Gemisches können leichter durch die Polymermembran permeieren, sie werden dampfförmig auf der mit der Gasphase in Berührung stehenden Seite der Polymermembran entweder durch Abpumpen oder durch den Inertgasstrom laufend entfernt. Schlechter permeierende Komponenten bleiben in der flüssigen Phase zurück und reichern sich in ihr an, bis der gewünschte Trennungsgrad in gut und schlecht permeierende Komponenten bzw. die gewünschte hohe Reinheit der zurückgebliebenen, schlechter permeierenden Komponenten erreicht ist.

Besonders bemerkenswert an diesem als Flüssigkeitspermeation oder Pervaporation bezeichneten und der Trennung von Gasgemischen mittels Membranen entsprechenden Prozeß ist die Tatsache, daß hiermit auch solche Flüssigkeitsgemische in ihre Bestandteile zerlegt werden können, die durch einfache Destillation nicht zu trennen sind, da sie entweder Azeotrope bilden oder die Siedepunkte der Komponenten so dicht zusammenliegen, daß eine effektive und wirtschaftliche Trennung nicht möglich ist. Bei der Pervaporation ist nämlich für die Zusammensetzung des Gemisches in der Gasphase nicht mehr der Partialdampfdruck der Komponenten über der Flüssigkeit bestimmend, sondern die unterschiedliche Permeabilität der Membran und damit deren Selektivität für die verschiedenen Komponenten in dem flüssigen Gemisch. So konnten z.B. im Labormaßstab Gemische aus Benzol/Cyclohexan und Isopopanol/Wasser über die jeweiligen Azeotropen gemische hinaus mittels Pervaporation getrennt werden. Desgleichen gelang die Trennung der Xylolisomeren o-Xylol (Kp. 144,4°C). m-Xylol (Kp. 139,1°C) und p-Xylol (Kp. 138,3°C) durch Pervaporation im Laboratorium.

Eine besondere Stellung nehmen die Gemische der einfachen sauerstoffhaltigen organischen Verbindungen, z.B. der einfachen Alkohole, Ketone, Äther, Aldehyde und Säuren, mit Wasser ein. Einerseits handelt es sich bei diesen Verbindungen häufig um technisch wichtige Stoffe, die in großem Maßstab für die unterschiedlichsten Anwendungen in trockenem, wasserfreien Zustand benötigt werden; andererseits sind diese Verbindungen durchweg mit Wasser vollständig oder in weiten Bereichen mischbar und bilden mit Wasser Azeotrope, so daß eine Abtrennung und Gewinnung der wasserfreien organischen Stoffe mit einem erheblichen Aufwand verbunden ist. Es hat deshalb nicht an Versuchen gefehlt, Pervaporationsverfahren für die Trennung derartiger Gemische einzusetzen; die bisherigen Bemühungen sind jedoch nicht über das Stadium von Laborversuchen hinausgelangt. Die bekannten Membranen aus Cellulosedi- und -triacetat, die auch anderweitig, z.B. für die Umkehrosmose Verwendung finden, besitzen zwar für manche Zwecke eine ausreichende mechanische Stabilität und befriedigenden Permeatfluß; ihre Selektivität reicht jedoch für einen wirtschaftlichen Einsatz für die Pervaporation noch nicht aus.

Es ist außerdem bekannt, Membranen zur Gastrennung einzusetzen, wie es z.B. in US—A—4 230 462 und DE—A1—28 50 998 beschrieben wird. Daneben kennt der Stand der Technik die Verwendung von Membranen bei der Umkehrosmose DE—A1—24 41 311) und bei der thermischen Membrandestillation (DE—A1—30 05 192).

Die US-A-3 035 060 beschreibt eine einschichtige Membran mit einer Schichtdicke von 19 bis 25 $\mu$m aus thermisch vernetztem Polyvinylalkohol für Pervaporationszwecke. Auch in Journal of Membrane Science 8 (1981) 105 - 114 ist eine einschichtige Membran mit einer Schichtdicke von 55 $\mu$ aus thermisch vernetztem Polyvinylalkohol für die Pervaporation beschrieben. Die Kolloid-Zeitschrift u. Zeitschrift Polymere 251 (1973), 225 - 231 erwähnt die Verwendung einer Membran aus Polyvinylalkohol für die Pervaporation ohne irgendwelche Angaben bezüglich Schichtdicke oder möglicher Vernetzung. Schließlich ist auch im Journal of Applied Polymer Science 14 (1970) 2341 - 2356 eine einschichtige Membran aus Polyvinylalkohol für die Pervaporation beschrieben, wobei speziell ein biaxial orientierter Polyvinylalkohol-Film mit einer Dicke von 30 $\mu$m Verwendung findet, der etwa 4% eines Polyol-Weichmachers enthält.

Eine besondere Art von Mehrschichtmembran, die im technischen Sprachgebrauch die Bezeichnung Kompositmembran oder Verbundmembran hat, wird außer in der vorstehend erwähnten Druckschrift DE—A1—30 05 192 auch in EP—A2—0 047 953 beschrieben.

Die vorliegende Erfindung betrifft nun die Verwendung einer Kompositmembran wie in Anspruch 1 definiert für die Trennung von Flussigkeitsgemischen nach dem Verfahren der Pervaporation.

Die erfindungsgemäß verwendete Membran eignet sich für die Trennung von Flüssigkeitsgemischen mittels Flüssigkeitspermeation oder Pervaporation, insbesondere für die Abtrennung von Wasser aus seinen Gemischen mit sauerstoffhaltigen organischen Flüssigkeiten, wie einfache Alkohole, Äther, Ketone, Aldehyde oder Säuren. Darüber hinaus ist die erfindungsgemäß verwendete Membran auch zur Trennung von Gasgemischen geeignet.

Die Membranen besitzen durch ihren mehrschichtigen Aufbau einerseits eine hervorragende mechanische Stabilität, andererseits läßt sich auf die mechanisch stabile Stützschicht die Trennschicht in so dünner Schicht auftragen, daß Permeatfluß und Selektivität auch einen wirtschaftlichen Einsatz derartiger Membranen erlauben.

Erfindungsgemäß besteht die Trennschicht der Kompositmembran aus vernetztem Polyvinylalkohol. Polyvinylalkohol ist durch Verseifung von Polyvinylacetat zugänglich. Vorzugsweise wird hierbei ein Polyvinylalkohol mit möglichst hohem Verseifungsgrad verwendet, z.B. mit einem Verseifungsgrad von über 98 oder über 99 Prozent. Die Molekulargewichte sind nicht kritisch, sofern nur Filmbildung bzw. Membranbildung gewährleistet ist. Übliche Molekulargewichte liegen im Bereich von 15.000 bis 200.000, z.B. 70.000 bis 120.000 (Dalton). Geeignete Produkte sind im Handel erhältlich.

Bei den Trennschichten ist es (ebenso wie bei den porösen Stützschichten) erforderlich, daß die hierfür benutzten Polymeren unter den Betriebsbedingungen weder von Wasser noch von den zu trennenden Lösungsmitteln gelöst oder angegriffen werden.

Die Verwendung von vernetztem Polyvinylalkohol als Trennschicht zeichnet sich durch eine Reihe von Besonderheiten aus. Polyvinylalkohol ist in Wasser sehr gut löslich und kann deshalb in einfacher Weise aus wässriger Lösung aufgebracht werden, hingegen ist Polyvinylalkohol in allen einfachen organischen Lösungsmitteln unlöslich. Polyvinylalkohol ist chemisch und thermisch stabil; durch Vernetzung können Polyvinylalkoholschichten so nachbehandelt werden, daß sie auf Dauer auch in heißem Wasser unlöslich sind und nur noch eine, durch die Art der Vernetzungsreaktion einstellbare Quellung mit Wasser zeigen. Auf geeignete Stützschichten lassen sich sehr dünne, fest haftende Trennschichten aus Polyvinylalkohol auftragen, die einen ausreichend hohen Permeatfluß besitzen. Durch die Herstellungsbedingungen lassen sich die Eigenschaften der Polyvinylalkohol-Trennschichten in weiten Bereichen variieren, so daß die hiermit hergestellten Pervaporationsmembranen hinsichtlich Selektivität und Permeatfluß optimal an das jeweilige Trennproblem angepaßt werden können.

Durch die Vernetzung des Polyvinylalkohols wird seine Unlöslichkeit in Wasser bewirkt. Die Vernetzung erfolgt durch Veresterung mit Dicarbonsäuren. vorzugsweise solchen, die zusätzlich noch Hydroxyl- und/oder Ketogruppen enthalten, durch Veretherung unter der katalytischen Einwirkung der Säuren oder mittels Dihalogenverbindungen, wie 1,3-Dichloraceton oder 1,3-Dichlorisopropanol, durch Acetalisierung mittels Aldehyden oder Dialdehyden oder durch eine kombinierte Anwendung dieser Verfahren Bezogen auf Äthanol/Wasser-Gemische führt im allgemeinen die Veresterung zu einer Erhöhung der Selektivität und die Acetalisierung zu einer Erhöhung des Permeatflusses, während der Einfluß einer Verätherung auf Selektivität und Permeatfluß weniger ausgeprägt ist. Das Vorstehende gilt sinngemäß auch für andere wasserhaltige Gemische. Die Auswirkungen einiger unterschiedlicher Vernetzungen sind aus den Ausführungsbeispielen ersichtlich.

Die Trennschicht aus Polyvinylalkohol muß porenfrei und fehlstellenfrei (löcherfrei) sein. Die Schichtdicke der Trennschicht beträgt 0,05 bis 10 μm, vorzugsweise 0,1 bis 5 μm, wobei sich Schichtdicken um 1 bis 2 μm in der Praxis als besonders geeignet erwiesen haben.

Die porenfreie Trennschicht wird, gelöst in einem geeigneten Lösungsmittel, direkt auf die poröse Stützschicht aufgebracht. Die Konzentration ist hierbei nicht kritisch, jedoch lassen sich mit zu hochviskosen Lösungen kaum noch genügend dünne Schichten erzielen. Das bevorzugte Lösungsmittel für Polyvinylalkohol ist Wasser.

Als poröse Stützschichten für die mehrschichtige Membran kommen ganz allgemein alle als Ultrafiltrationsmembranen geeignete Stoffe in Frage. Wegen der gewünschten thermischen Stabilität und der Unempfindlichkeit gegenüber den zu trennenden Lösungsmittelgemischen sind poröse Stützschichten aus Polyacrylnitril (PAN), Polysulfon (PS) und aus hydrolysierten bzw. verseiften Celluloseacetaten bevorzugt. Vorzugsweise besitzt die poröse Stützschicht eine sehr enge Porenradienverteilung mit einem solchen mittleren Porenradius, daß das für die Trennschicht der Membran verwendete Polymere, vorzugsweise Polyvinylalkohol, nicht in die Poren der Stützschicht eindringen kann, sondern auf der Oberfläche zurückgehalten wird. Auf diese Weise lassen sich sehr gleichmäßige, dünne und wirksame Trennschichten auf die poröse Stützschicht aufbringen. Die Einstellung der Porenradien und der Porenradienverteilung kann einmal durch entsprechende Bedingungen bei der Herstellung der porösen Stützschicht selbst erfolgen, oder durch Aufbringen einer Zwischenschicht auf eine weniger geeignete poröse Stützschicht, wobei dann erst auf die Zwischenschicht die Trennschicht aufgebracht wird (vgl. Ausführungsbeispiel 5)

Die Dicke der porösen Stützschicht ist nicht kritisch, sofern nur eine ausreichende mechanische Festigkeit der mehrschichtigen Membran gewährleistet ist. Die Dicke der porösen Stützschicht beträgt z.B. 20, 50 oder 100 μm, oder mehr.

In einer bevorzugten Ausführungsform ist bei der erfindungsgemäß verwendeten Membran die Poröse Stützschicht auf ein Vlies oder ein gewebtes Tuch als Trägerschicht aufgebracht. Ebenso wie die anderen Schichten ist die Trägerschicht vorzugsweise temperatur- und chemikalienbeständig. Die Trägerschicht ist auf der Schichtseite vorzugsweise möglichst glatt, um eine Schädigung der porösen Stützschicht zu vermeiden. Bevorzugt werden Polyester; Celluloseschichten sind im allgemeinen nicht glatt genug. Auch die an sich geeigneten Polyamide sind im allgemeinen wegen ihrer im Vergleich zu Polyestern geringeren thermischen Beständigkeit und geringerem Lösungsmittelfestigkeit weniger bevorzugt. Die Dicke der Trägerschicht ist ebenfalls nicht kritisch; in der Praxis haben sich Dicken von 50 bis 150 μm, z.B. um 100 μm, als besonders geeignet erwiesen.

Das Aufbringen und Verteilen der die poröse Stützschicht und die porenfreie Trennschicht bildenden Polymerlösungen erfolgt im allgemeinen so, daß die Polymerlösungen mittels Messerklinge oder Glasstab über die entsprechende Schicht verteilt und abgestreift werden. Hierbei werden die Schichtdicken nach Maßgabe der gewünschten Schichtdicke entsprechend eingestellt. Neben diesem Verfahren hat sich in der Praxis insbesondere für weniger viskose Polymerlösungen auch ein Verfahren bewährt, das in der amerikanischen Literatur als "meniscus coating" oder "dip coating" beschrieben ist. Hierbei wird das zu beschichtende Trägermaterial mit der zu beschichtenden Seite nach unten über eine Walze gezogen, wobei es die Oberfläche der aufzutragenden Polymerlösung gerade berührt. Zwischen der Flüssigkeitsoberfläche und dem Trägermaterial bildet sich dann ein Meniskus aus, und die Oberfläche des Trägermaterials wird durch die Polymerlösung benetzt. In einigen Fällen ist es bevorzugt, die Benetzbarkeit des Trägermaterials durch Zusatz von Netzmitteln zu verbessern. Durch Variation der Viskosität der Polymerlösung, der Ziehegeschwindigkeit, des Trägermaterials und der Abtropfzeit für die Polymerlösung kann die Dicke der so aufgetragenen Schicht der Polymerlösung in weiten Bereichen verändert und reproduzierbar eingestellt werden.

Zur Charakterisierung von Pervaporationsmembranen dienen der Permeatfluß in $kg/h \cdot m^2$ unter den Vesuchsbedingungen der Temperatur, der Zusammensetzung des zu trennenden Gemisches und des Drucks auf der Permeatseite, sowie die Selektivität B der Membran unter diesen Bedingungen. B ist eine dimensionslose Zahl, die gegeben ist als das Konzentrationsverhältnis der binären Mischung im Permeat dividiert durch das Konzentrationsverhältnis im Zulauf.

$$B = \frac{\dfrac{c\text{Wasser Permeat}}{c\text{organ.Lösung Permeat}}}{\dfrac{c\text{Wasser Zulauf}}{c\text{organ.Lösung Zulauf}}}$$

Die Größe des Permeatflusses zeigt eine starke Abhängigkeit von der Temperatur. Während bei allen Ausführungsbeispielen der Zulauf des flüssigen Gemisches unter Atmosphärendruck erfolgte, herrschten auf der Permeatseite Drücke zwischen 10 und 50 mbar. In diesem Bereich ist die Höhe des permeatseitigen Druckes ohne erkennbaren Einfluß auf Permeatfluß und Selektivität der Membranen.

Im folgenden wird die Erfindung anhand der Zeichnungen erläutert. Es zeigen:

Fig. 1 einen Querschnitt durch eine bevorzugte Ausführungsform einer erfindungsgemäß verwendeten mehrschichtigen Membran, und
Fig. 2 einen Querschnitt durch eine weitere bevorzugte Ausführungsform einer erfindungsgemäß verwendeten Membran.

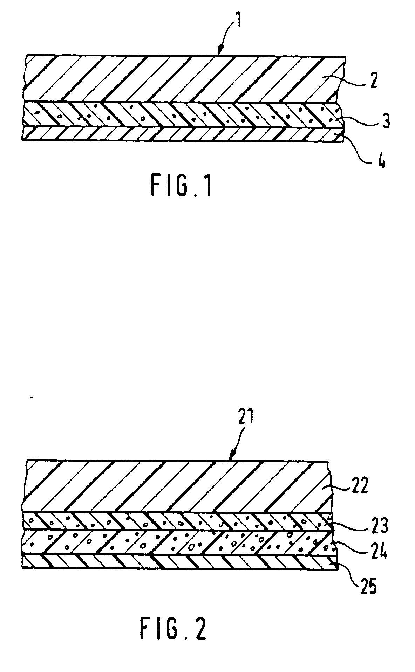

In Fig. 1 besteht eine mehrschichtige Membran 1 aus einer Polyestervlies-Trägerschicht 2 mit einer Dicke von 120 µm. Hier- auf befindet sich eine poröse Stützschicht 3 aus Polyacrylnitril mit einer Dicke von 50 µm. Die Trennschicht 4 besteht aus mit Maleinsäure vernetztem Polyvinylalkohol und besitzt eine Dicke von 1,2 µm. Die Herstellung dieser mehrschichtigen Membran ist in Beispiel 1 beschrieben.

In Fig. 2 besteht eine mehrschichtige Membran 21 aus einer Polyestervlies-Trägerschicht 22 mit einer Dicke von 120 µm. Hierauf befindet sich eine poröse Stützschicht 23 aus Polyacrylnitril mit einer Schichtdicke von 50 µm. Hierauf befindet sich eine poröse Zwischenschicht (weitere Stützschicht) 24 aus verseiftem Cellulosetriacetat mit einer Dicke von 50 µm. Eine porenfreie Trennschicht 25 aus mit Maleinsäure vernetztem Polyvinylalkohol besitzt eine Schichtdicke von unter 1 µm. Die Herstellung dieser mehrschichtigen Membran ist in Beispiel 5 beschrieben.

Die Beispiele erläutern die Erfindung.

Bei der in den Beispielen verwendeten Trägerschicht handelt es sich um ein Polyestervlies mit einer Schichtdicke von etwa 120 µm.

Bei dem verwendeten Polyvinylalkohol (PVA) handelt es sich um ein übliches Handelsprodukt mit einem Verseifungsgrad von mindestens 99 Prozent und einem mittleren Molekulargewicht von 115.000 (Dalton).

Beispiel 1

Eine 15-prozentige Lösung von Polyacrylnitril (PAN) in Dimethylformamid (DMF) wird mittels eines Messerblattes als 50 µm starke Schicht auf ein Polyestervlies als Trägerschicht aufgetragen und nach dem Phaseninversionsverfahren bei 8°C in Wasser gefällt. Die so erhaltene poröse Membran zeigt bei 4 bar Druckdifferenz einen Reinwasserfluß von 150 $l/h \cdot m^2$ und ein Rückhaltevermögen von über 99,5 Prozent für eine 1-prozentige Lösung von PVA in Wasser.

Auf diese PAN-Membran wird anschließend eine Lösung von 7 Gewichtsprozent PVA in Wasser, dem 0.05 Mol Maleinsäure je Mol Monomereinheit PVA zugesetzt wurden, aufgetragen. Nach Trocknen, Aushärten und Vernetzen der PVA-Trennschicht bei 150°C ist die PVA-Trennschicht auch in siedendem Wasser nicht mehr löslich. Untersuchungen mit Wasser/Alkohol-gemischen ergaben bei einer Zulauftemperatur von 80°C und einem Wasser/Alkohol-Verhältnis im Zulauf von 1/4 eine Selektivität von B = 1400 und einen Permeatfluß von 0,04 $kg/h \cdot m^2$.

Unter sonst gleichen Bedingungen, jedoch bei einem Wasser/Alkohol-Verhältnis im Zulauf von 5/95 betrugt die Selektivität noch 9500 bei einem Permeatfluß von 0.01 $kg/h \cdot m^2$.

## Beispiel 2

Beispiel 1 wird wiederholt, wobei jedoch bei der Herstellung der PVA-Trennschicht eine verminderte PVA-Konzentration von 5 Prozent angewendet wird. An der fertigen Membran werden unter den angegebenen Bedingungen folgende Werte gemessen:

Zulauf 12 Gew.-% Wasser, 88 Gew.-% Äthanol, Zulauftemperatur 80°C, Selektivität 250, Permeatfluß 0,05 kg/h $\cdot$ m$^2$.
Zulauf 20 Gew.-% Wasser, 80 Gew.-% Isopropanol, Zulauftemperatur 45°C, Selektivität 250, Permeatfluß 0,3 kg/h $\cdot$ m$^2$.
Zulauf 20 Gew.-% Wasser, 80 Gew.-% Aceton, Zulauftemperatur 60°C, Selektivität 100, Permeatfluß 0,25 kg/h $\cdot$ m$^2$.

## Beispiel 3

Eine gemäß Beispiel 1 hergestellte PAN-Membran wird mit einer wässrigen Lösung folgender Zusammensetzung beschichtet: PVA 5 Gew.-%; Formaldedyd 1 Mol je Mol PVA-Monomereinheit; Salzsäure 1 Mol je Mol PVA Monomereinheit.

Nach Aushärten bei 155°C werden für Äthanol-Wasser-Mischungen bei 70°C folgende Trennleistungen bestimmt:

Zulauf 80 Gew.-% Äthanol, Selektivität 30, Permeatfluß 1,5 kg/h $\cdot$ m$^2$.
Zulauf 90 Gew.-% Äthanol, Selektivität 50, Permeatfluß 1,0 kg/h $\cdot$ m$^2$.
Zulauf 99 Gew.-% Äthanol, Selektivität 30, Permeatfluß 0,25 kg/h $\cdot$ m$^2$.

## Beispiel 4

Eine 18-prozentige Lösung von Polysulfon (siehe Condensend Chemical Dictionary, 8. Aufl., 1971, S. 712) in DMF wird, wie in Beispiel 1 beschrieben, auf Polyestervlies als Trägerschicht aufgetragen und in Wasser von 8°C durch Phaseninversion gefällt. Auf die so gebildete poröse Stützschicht wird eine wässrige Lösung von 6 Gewichtsprozent PVA mit 0,05 Mol Fumarsäure je Mol Monomereinheit PVA aufgetragen und bei 150°C ausgehärtet. Bei einer Temperatur von 80°C wurde bei einer Zulaufkonzentration von 80 Gewichtsprozent Äthanol in Wasser eine Selektivität von 350 und ein Permeatfluß von 0,2 kg/h $\cdot$ m$^2$ gemessen.

## Beispiel 5

Eine 15-prozentige Lösung von PAN in DMF wird gemäß Beispiel 1 auf ein Polyestervlies als Trägerschicht aufgetragen und in Wasser von 15°C gefällt. Die so erhaltene poröse Membran zeigt einen Reinwasserfluß von über 150 l/h $\cdot$ m$^2$, ein Rückhaltevermögen für eine 1-prozentige PVA-Lösung von 90 Prozent bei einem mittleren Molekulargewicht des PVA von 115000, und von 50 Prozent bei einem mittleren Moleklargewicht des PVA von 72000. Nach dem Trocknen wird auf diese Membran durch "dip coating" eine 1-prozentige Lösung von Cellulosetriacetat in wasserfreien Chloroform aufgetragen und das Lösungsmittel unter Ausschluß von Feuchtigkeit abgedampft.

Die erhaltene Membran mit einer Schicht aus Cellulosetriacetat wurde der Einwirkung wässriger Ammoniaklösung eines pH-Werts von 10,5 ausgesetzt. bis das Cellulosetriacetat vollständig verseift war. Jetzt zeigte diese poröse Membran für PVA vom Molekulargewicht 115000 ein Rückhaltevermögen von über 99,5 Prozent und für PVA vom Molekulargewicht 72000 ein Rückhaltevermögen von 98 Prozent. Beschichtet mit einer 3-prozentigen PVA-Lösung mit Maleinsäure als Vernetzungsmittel ergab sich bei einer Zulauftemperatur von 78°C und einer Äthanolkonzentration von 80 Prozent eine Selektivität von 250 bei einem Permeatfluß von 0.5 kg/h $\cdot$ m$^2$.

## Patentansprüche

1. Verwendung einer Komposit-Membran (1, 21) mit einer porenfreien Trennschicht (4, 25) aus einem ersten Polymeren und einer porösen Stützschicht (3, 23) aus einem zweiten Polymeren, wobei die porenfreie Trennschicht aus vernetztem Polyvinylalkohol mit einer Schichtdicke von 0,05 - 10 µm besteht, wobei die Vernetzung durch Veresterung mit Dicarbonsäuren, durch Veretherung unter der katalytischen Einwirkung der Säuren oder mittels Dihalogenverbindungen, durch Acetalisierung mittels Aldehyden oder Dialdehyden, oder durch eine Kombination dieser Verfahren erfolgt ist, und das für die Trennschicht der Membran verwendete Polymere nicht in die Poren der Stützschicht (3, 23) eingedrungen ist, für die Trennung von Flüssigkeitsgemischen nach dem Verfahren der Pervaporation.

2. Verwendung nach Anspruch 1, dadurch gekennzeichnet, daß die poröse Stützschicht (23) auf ein Vlies (2, 22) oder ein gewebtes Tuch als Trägerschicht aufgebracht ist.

3. Verwendung nach Anspruch 1 oder 2, dadurch gekennzeichnet, daß die poröse Stützschicht (3, 23) aus Polyacrylnitril besteht.

4. Verwendung nach Anspruch 1 oder 2, dadurch gekennzeichnet, daß die poröse Stützschicht (3, 23) aus Polysulfon besteht.

5. Verwendung nach einem der Ansprüche 1 bis 4, dadurch gekennzeichnet, daß sich zwischen Trennschicht (25) und Stützschicht (23) eine weitere Stützschicht (Zwischenschicht) (24) befindet, die durch Verseifung einer aufgebrachten Cellulosetriacetatschicht hergestellt worden ist.

## Claims

1. Use of a composite membrane (1, 21) with a non-porous separating layer (4, 25) of a first polymer and a porous backing layer (3, 23) of a second polymer, wherein said non-porous separating layer consists of cross-linked polyvinyl alcohol having a thickness of from 0.05 to 10 μm, wherein the cross-linking has been effected by esterification with dicarboxylic acids, etherification under the catalytic action of acids or by means of dihalogen compounds, acetalisation by means of aldehydes or dialdehydes, or by the use of a combination of these methods, and wherein the polymer used for the separating layer of the membrane does not penetrate into the pores of the backing layer (3, 23), for the separation of liquid mixtures according to the process of pervaporation.

2. Use in accordance with claim 1, characterized in that the porous backing layer (23) is attached to a fleece (2, 22) or a woven cloth as carrier layer.

3. Use in accordance with claim 1 or 2, characterized in that the porous backing layer (3, 23) consists of polyacrylonitrile.

4. Use in accordance with claim 1 or 2, characterized in that the porous backing layer (3, 23) consists of polysulfone.

5. Use in accordance with any of claims 1 to 4, characterized in that a further backing layer (intermediate layer) (24) is located between the separating layer (25) and the backing layer (23), which has been produced by saponification of an applied cellulose triacetate layer.

## Revendications

1. Utilisation d'une membrane composite (1, 21) avec une couche de séparation sans porosités (4, 25) en un premier polymère et une couche de support poreuse (3, 23) en un deuxième polymère, la couche de séparation sans porosités consistant en un alcool polyvinylique réticulé d'une épaisseur de couche de 0,05 - 10 μm, la réticulation s'opérant par estérification avec des acides dicarboxyliques, par éthérification sous l'effet catalytique des acides ou au moyen de composés dihalogénés, par acétalisation au moyen d'aldéhydes ou de dialdéhydes, ou par application combinée de ces procédés, le polymère utilisé pour la couche de séparation de la membrane n'ayant pas pénétré les pores de la couche de support (3, 23), pour la séparation de mélanges liquides selon le procédé de pervaporation.

2. Utilisation selon revendication 1, caractérisée en ce que la couche de support poreuse (23) est appliquée sur un voile (2, 22) ou sur une toile tissée comme couche de soutien.

3. Utilisation selon revendication 1 ou 2, caractérisée en ce que la couche de support poreuse (3, 23) consiste en un polyacrylonitrile.

4. Utilisation selon revendication 1 ou 2, caractérisée en ce que la couche de support poreuse (3, 23) consiste en un polysulphone.

5. Utilisation selon une des revendications 1 à 4, caractérisée en ce qu'une couche de support supplémentaire (couche intermédiaire) (24) se trouve entre la couche de séparation (25) et la couche de support (23), produite par saponification d'une couche de triacétocellulose ayant été introduite.

FIG.1

FIG.2